(19) Europäisches Patentamt
European Patent Office
Office européen des brevets

(11) Publication number: **0 196 212 B1**

# (12) EUROPEAN PATENT SPECIFICATION

(45) Date of publication of patent specification: **08.05.91**

(51) Int. Cl.[5]: **C08F 220/22**, C09J 4/02, G02B 6/24

(21) Application number: **86302166.3**

(22) Date of filing: **24.03.86**

## (54) Adhesive composition for optical fibers.

(30) Priority: **25.03.85 US 715560**

(43) Date of publication of application: **01.10.86 Bulletin 86/40**

(45) Publication of the grant of the patent: **08.05.91 Bulletin 91/19**

(84) Designated Contracting States: **AT BE CH DE FR GB IT LI NL SE**

(56) References cited:
**GB-A- 2 047 913**
**US-A- 3 055 932**

(73) Proprietor: **RAYCHEM CORPORATION (a Delaware corporation)**
**300 Constitution Drive**
**Menlo Park, California 94025(US)**

(72) Inventor: **Moyer, Wendell W.**
**43 Adam Way**
**Atherton California 94025(US)**
Inventor: **Powell, Stephen F.**
**730 Southview Way**
**Woodside California 94062(US)**

(74) Representative: **Benson, John Everett et al**
**Raychem Limited Intellectual Property Law Department Faraday Road Dorcan**
**Swindon, Wiltshire SN3 5HH(GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### Field of the Invention

This invention relates to novel fluoroacrylate adhesive compositions which are useful for splicing optical fibres or joining optical fibres to other optical elements or devices.

### Background of the Invention

Optical fibres have been spliced and joined to other optical elements and devices using a variety of different methods, and a variety of different materials have been used as adhesives or coupling agents. One of these methods involves the use of photo-curable adhesives. Examples of photocurable adhesives and their use in splicing optical fibres are shown in U.S. patents 3,864,019 to Smolinski et al., 4,057,488 to Miller, and 4,443,494 to Gonser and U.K. patent 2,047,913 to Onstott et al.

It has been recognized that in addition to matching the refractive index of the adhesive material to the refractive index of the optical fibre or the core of the optical fibre, the adhesive material after it is cured should be capable of withstanding certain environmental conditions. The importance of the environmental conditions, such as temperature and humidity, is discussed in EP-A-0138326.

It is desired to have an adhesive composition for splicing optical fibres which has a refractive index which will exactly match the refractive index of the optical fibre and particularly the core of the optical fibre and will withstand the environmental conditions normally encountered in service. It is also desired to have an adhesive composition in which the refractive index of the cured adhesive composition can be easily adjusted to match the various refractive indices of the various optical fibres which must be spliced or connected to other optical elements or devices.

### Description of the Invention

This invention provides for a curable composition comprising:

(a) a fluoroacrylate having the formula

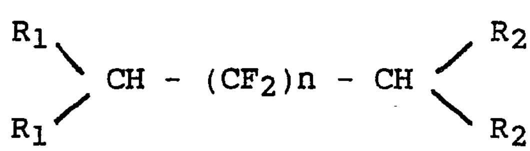

wherein $R_1$ and $R_2$ are acrylate, methacrylate or hydro gen, n is an integer of 1 through 5, and at least one $R_1$ is acrylate or methacrylate and at least one $R_2$ is acrylate or methacrylate; and

(b a non-fluoro, polyfunctional acrylate or methacrylate monomer having 2 to 7, preferably from 3-6, especially 3 or 4, acrylate or methacrylate groups and being present in an amount effective to adjust the refractive index of the cured composition to a desired value.

The fluoracrylate can be prepared as described in U.S. patent 3,055,932 to Verbanic et al. The preferred fluoracrylate for splicing typically available commercial optical fibres is a diacrylate, i.e., where one is $R_1$ is hydrogen and one $R_2$ is hydrogen, and wherein n is 2,3 or 4. Thus the preferred fluoracrylate is 2,2,3,3,4,4-hexafluoropentamethylene diacrylate, which has a refractive index of 1.41 as a liquid and when cured by photo-polyermization has a refractive index of 1.43.

The nonfluoro polyfunctional acrylate or methacrylate monomers are well know in the art as illustrated by the patents referred to herein. Examples of such polyfunctional monomers include tri-methylol-propanetriacrylate, pentaerythritoltetraacrylate, dipentaerythritolhexaacrylate, tris (2-hydroxyethyl) isocyanurate, trimethylolpropanetrimethacrylate and pentaerythritoltrimethacrylate. A particularly preferred polyfunctional acrylate is called dipentaerythritol monohydroxypenta acrylate. Preferred polyfunctional acrylate or methacrylate monomers have 3 or 4 acrylates and/or methacrylate groups and a molecular weight in the range of 250 to 350. The preferred polyfunctional acrylate or methacrylate monomers have no more than one hydroxyl group present, because it is believed that multiple hydroxyl groups will have an adverse effect on optical fibre splices in certain ranges of infrared light spectra.

The class of fluoroacrylates useful in this invention when fully cured will have a refractive index in the range of about 1.39 to about 1.45. The polyfunctionalacrylates when cured will have a refractive index in the range of about 1.49 to about 1.52. Commercially available optical fibres typically have a refractive index at the core of about 1.45 to 1.47. By mixing the proper proportion of the fluoroacrylate and the nonfluoro polyfunctional acrylate or methacrylate, the adhesive composition when cured will have a refractive index which will exactly match the refractive index of the core of the optical fibre. Therefore, this invention provides a simple adhesive composition which can be adjusted to have the desired refractive index when cured by adjusting the amount of the nonfluoro polyfunctional acrylate or methacrylate monomer present in the curable adhesive composition.

The compositions of this invention may contain up to about 98% by weight fluoroacrylate but generally will be up to about 95% preferably 90%, and more preferably up to about 80% and most preferably up to about 70% fluoroacrylate. The nonfluoro polyfunctional acrylate or methacrylate may be present in an amount up to about 95% by weight, but generally will be present up to about 50% by weight, depending on the refractive index desired. In many applications it will only be desirable to use up to 25% or even 5% by weight. The oligomer may be present in the range of 0 to 50% by weight and generally will be in the range of about 5 to 35%, depending on the viscosity desired in the curable composition and/or on the plasticizing effect desired in the cured composition.

The compositions of this invention may be cured thermally or chemically, but in many uses are best used as photocurable compositions. Consequently they may contain an effective amount of a photoinitiator. Photoinitiators for acrylate and methacrylate materials are well known in the art and are typically used in small amounts, for example up to about 3% by weight of the total composition. Examples of photoinitiators of the type useful in the compositions of this invention include the benzoin ether type, such a benzoin methyl ether or benzoin isopropyl ether, substituted benzoin ethers such as anisoin methyl ether, substituted acetophenones such as 2,2-diethoxyacetophenone, or 2,2-dimethoxy -2-phenylacetophenone, and substituted alphaketols such as 2-methyl-2-hydroxypropiophenone, isobutyl benzoin ether, 2-hydroxy-2-methyl-1-phenyl propan-1-one, isoproyl benzoin ether, benzoin ethyl ether, benzoin methyl ether, benzil, hydroxy cyclo-hexyl phenyl ketone, isopropyl thioxanthone, chlorine functional substituted benzophenone (Acetocure X-5000, Trade Mark), halogen substituted alkyl-alkylketone (Sandoray 1000, Trade Mark). The photoinitiators are normally used in amounts from about 0.01 to 5.0, and more usually, 1 to 3 parts per hundred parts by weight of the adhesive composition of this invention. A preferred photoinitiator for the compositions of this invention is hydroxycyclohexylphenyl ketone (Irgacure 184, Trade Mark Ciba-Geigy).

In some applications it may be necessary to adjust the viscosity of the composition of this invention. For example, a common method of joining optical fibres is to place the adhesive in a tube or sleeve, insert into the tube optical fibres from each end of the tube into the adhesive present, then photocure the adhesive composition. In such an application the uncured adhesive composition must have a viscosity which is high enough so that the adhesive will be retained in the tube by surface tension or capillary forces, but the adhesive cannot have such a high viscosity that it is difficult to insert the ends of the fibres into the adhesive present or move the fibres in the adhesive for purposes of alignment of the optical fibres before curing the adhesive composition. The adhesive composition of this invention can be used in some applications at a very low viscosity or the viscosity can be adjusted upward when necessary for use in certain other applications. When used in a tube or sleeve as described in US-A-4746189 it is generally desirable to have a viscosity of the uncured adhesive to be in a range of about 200 to 5,000 mPas. (200 to 5,000 centipoise) at room temperature.

The adhesive compositions of this invention may contain an acrylate or methacrylate oligomer which does not affect the refractive index of the cured adhesive to any significant degree which cannot be compensated for by changing the amount of the nonfluoro polyfunctional acrylate or methacrylate monomer present in the curable composition. The oligomer additive for viscosity adjustment also should not adversely affect the crosslink density of the cured composition. The oligomer can also provide flexibility in the cured adhesive to reduce internal stresses and potential cracking of the cured adhesive. The oligomer can also reduce the shrinkage which may occur when the adhesive composition of this invention is cured. The oligomers useful in this invention are of the acrylic or methacrylic polyester type. Other oligomers known in the art to not interfere with the required optical properties, such as some epoxy and urethane type oligomers may be used. Preferably the oligomer is a multi-functionally acrylated aliphatic polyester having a molecular weight of 2000 and a functionality of 6 (Ebecryl 830, Trade Mark of a material available from Union Carbide Belgium). This preferred oligomer can be added to a flouroacrylate composition of this invention up to about 25% by weight without affecting the refractive index of the cured composition of the fluoroacrylate and nonfluoro polyfunctional acrylate or methacrylate monomer.

The compositions of this invention may be thermally or chemically cured. However, for splicing optical

fibres photocuring is preferred. It has also been observed that it is desirable to provide a photoinitiator and a light intensity which produces a very fast cure of the adhesive composition of this invention. It is believed that the faster the composition cures, the more complete the composition cures and the higher the crosslink density may be. The quick, comlete curing is believed desirable in order to obtain the stability in the cured composition.

when used as optical adhesives the compositions of this invention should be of high purity and carefully filtered to remove any particulate matters which would interfere with the optical transmissivity.

This invention also provides for a method of splicing optical fibres which comprises applying the composition of this invention to an optical fibre and curing the composition.

Example

To illustrate a typical composition according to this invention, the following composition was prepared:

| | |
|---|---|
| 70% | by weight 2,2,3,3,4,4-hexafluoropentamethylene diacrylate |
| 5% | by weight dipentaerythritol monohydroxypenta acrylate |
| 25% | by weight acrylated aliphatic polyester oligomer having functionality of 6 and molecular weight of 2000 (Ebecryl 830, Trade Mark UCB) |
| 2 | parts by weight (based on the weight of the above composition) 1-hydroxycyclohexylphenyl ketone (Irgacure 184, Trade Mark Ciba-Geigy) |

The viscosity of the uncured composition was approximately 500 mPas. (500 centipoise) at room temperature. The refractive index ($n_d^{25}$) of the uncured composition was 1.42 and the refractive index of the cured composition after photocuring was 1.46. The composition was used to splice optical fibres of both the multimode and monomode types and acceptable splices were made having less than 0.1 dB loss. The splices also passed a test of temperature cycling from -40 to +60° C at three cycles per day for at least ten days, thermal aging at 60° C for at least ten days and humidity exposure test at 95% relative humidity at 40° C for at least ten days hours with no appreciable variance in attenuation.

**Claims**

1. A curable composition comprising:

(a) a fluoroacrylate having the formula

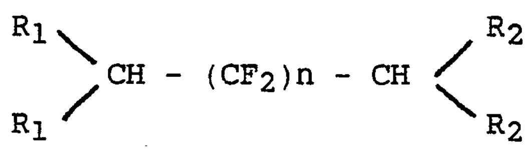

wherein $R_1$ and $R_2$ are acrylate, methacrylate or hydrogen, n is an integer of 1 through 5, and at least one $R_1$ is acrylate or methacrylate and at least one $R_2$ is acrylate or methacrylate; and

(b) a non-fluoro, polyfunctional acrylate or methacrylate monomer having 2 to 7 acrylate or methacrylate groups and being present in an amount effective to adjust the refractive index of the cured composition to a desired value.

2. A composition according to claim 1 wherein one $R_1$ is hydrogen and one $R_2$ is hydrogen and n is 2, 3 or 4.

3. A composition according to claim 1 wherein the non-fluoro, polyfunctional acrylate or methacrylate monomer has from 4 to 6 acrylate or methacrylate groups.

4. A composition according to claim 1 further comprising an effective amount of a photoinitiator.

5. A composition according to claim 1 further comprising an acrylate or methacrylate oligomer in an amount effective to provide the desired viscosity of the curable composition.

6. A composition according to claim 5 wherein the fluoroacrylate comprises up to 98% by weight of the composition.

7. A composition according to claim 6, wherein the fluoroacrylate comprises up to 95% by weight of the composition.

8. A composition according to claim 5 wherein the acrylate or methacrylate oligomer comprises up to about 50% of the composition.

9. A method of splicing an optical fibre comprising applying to the fibre a curable composition comprising:
(a) a fluoroacrylate having the formula

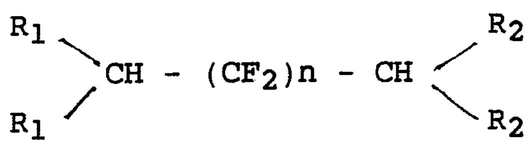

wherein $R_1$ and $R_2$ are acrylate, methacrylatre or hydrogen, and n is an integer of 1 through 5, and at least one $R_1$ is acrylate or methacrylate and at least one $R_2$ is acrylate or methacrylate; and
(b) a nonfluoro, polyfunctional acrylate or methacrylate monomer having 2 to 7 acrylate or methacrylate groups and being present in an amount effective to adjust the refractive index of the cured composition to a desired value; and curing the composition.

10. A method according to claim 9 wherein the composition further comprises a photoinitiator and the curing is effected by actinic light.

## Revendications

1. Composition réticulable, comprenant :
(a) un fluoro-acrylate répondant à la formule

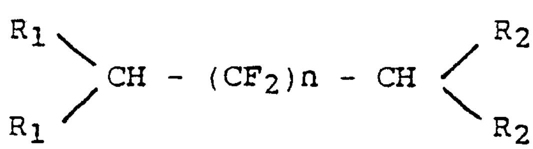

dans laquelle $R_1$ et $R_2$ représentent un groupe acrylate, un groupe méthacrylate ou l'hydrogène, n est un nombre entier de 1 à 5, et au moins un groupe $R_1$ est un acrylate ou méthacrylate et au moins un groupe $R_2$ est un acrylate ou méthacrylate ; et
(b) un monomère acrylate ou méthacrylate polyfonctionnel non fluoré ayant 2 à 7 groupes acrylate ou méthacrylate et étant présent en une quantité efficace pour ajuster l'indice de réfraction de la composition réticulée à une valeur désirée.

2. Composition suivant la revendication 1, dans laquelle un substituant $R_1$ représente l'hydrogène et un substituant $R_2$ représente l'hydrogène, et n est égal à 2, 3 ou 4.

3. Composition suivant la revendication 1, dans laquelle le monomère acrylate ou méthacrylate polyfonctionnel non fluoré possède 4 à 6 groupes acrylate ou méthacrylate.

4. Composition suivant la revendication 1, comprenant en outre une quantité efficace d'un photoinitiateur.

5. Composition suivant la revendication 1, comprenant en outre un oligomère acrylate ou méthacrylate en

une quantité efficace pour parvenir à la viscosité désirée de la composition réticulable.

6. Composition suivant la revendication 5, dans laquelle le fluoro-acrylate représente jusqu'à 98 % en poids de la composition.

7. Composition suivant la revendication 6, dans laquelle le fluoro-acrylate représente jusqu'à 95 % en poids de la composition.

8. Composition suivant la revendication 5, dans laquelle l'oligomère acrylate ou méthacrylate représente jusqu'à environ 50 % de la composition.

9. Procédé d'épissage d'une fibre optique, consistant à appliquer à la fibre une composition réticulable comprenant :
(a) un fluoro-acrylate répondant à la formule

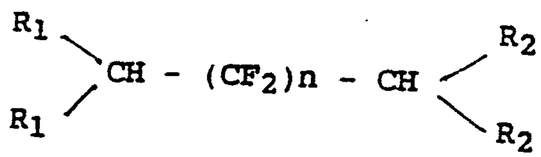

dans laquelle $R_1$ et $R_2$ représentent un groupe acrylate, un groupe méthacrylate ou l'hydrogène et n est un nombre entier de 1 à 5, et au moins un groupe $R_1$ représente un acrylate ou méthacrylate et au moins un groupe $R_2$ représente un acrylate ou méthacrylate ; et
(b) un monomère acrylate ou méthacrylate polyfonctionnel non fluoré ayant 2 à 7 groupes acrylate ou méthacrylate et étant présent en une quantité efficace pour ajuster l'indice de réfraction de la composition réticulée à une valeur désirée ; et à provoquer la réticulation de la composition.

10. Procédé suivant la revendication 9, dans lequel la composition comprend en outre un photo-initiateur et la réticulation est effectuée au moyen d'une lumière actinique.

## Ansprüche

1. Härtbare Zusammensetzung, umfassend:
(a) ein Fluoracrylat mit der Formel

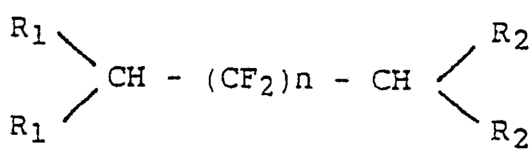

wobei $R_1$ und $R_2$ Acrylat, Methacrylat oder Wasserstoff sind, n eine ganze Zahl von 1 bis 5 ist und wenigstens ein $R_1$ Acrylat oder Methacrylat und wenigstens ein $R_2$ Acrylat oder Methacrylat ist; und
(b) ein fluorfreies, polyfunktionelles Acrylat- oder Methacrylatmonomer, das 2 bis 7 Acrylat- oder Methacrylatgruppen hat und in einer zur Einstellung der Brechungszahl der gehärteten Zusammensetzung auf einen gewünschten Wert wirksamen Menge vorhanden ist.

2. Zusammensetzung nach Anspruch 1, wobei ein $R_1$ Wasserstoff und ein $R_2$ Wasserstoff und n 2, 3 oder 4 ist.

3. Zusammensetzung nach Anspruch 1, wobei das fluorfreie, polyfunktionelle Acrylat- oder Methacrylatmonomer 4 bis 6 Acrylat- oder Methacrylatgruppen hat.

4. Zusammensetzung nach Anspruch 1, ferner umfassend eine wirksame Menge eines Fotoinitiators.

5. Zusammensetzung nach Anspruch 1, ferner umfassend ein Acrylat- oder Methacrylatoligomer in einer zur Erzielung der gewünschten Viskosität der härtbaren Zusammensetzung wirksamen Menge.

6. Zusammensetzung nach Anspruch 5, wobei das Fluoracrylat bis zu 98 Gew.-% der Zusammensetzung umfaßt.

7. Zusammensetzung nach Anspruch 6, wobei das Fluoracrylat bis zu 95 Gew.-% der Zusammensetzung umfaßt.

8. Zusammensetzung nach Anspruch 5, wobei das Acrylat- oder Methacrylatoligomer bis zu ca. 50 % der Zusammensetzung umfaßt.

9. verfahren zum Spleißen eines Lichtwellenleiters, umfassend: Aufbringen einer härtbaren Zusammensetzung auf den Lichtwellenleiter, wobei die Zusammensetzung umfaßt:
(a) ein Fluoracrylat mit der Formel

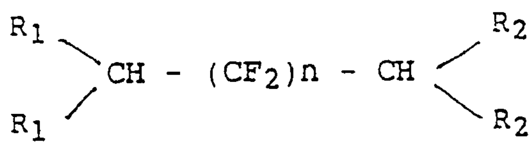

wobei $R_1$ und $R_2$ Acrylat, Methacrylat oder Wasserstoff sind und n eine ganze Zahl von 1 bis 5 ist und wenigstens ein $R_1$ Acrylat oder Methacrylat und wenigstens ein $R_2$ Acrylat oder Methacrylat ist; und
(b) ein fluorfreies, polyfunktionelles Acrylat- oder Methacrylatmonomer, das 2 bis 7 Acrylat- oder Methacrylatgruppen hat und in einer zur Einstellung der Brechungszahl der gehärteten Zusammensetzung auf einen gewünschten Wert wirksamen Menge vorhanden ist und Aushärten der Zusammensetzung.

10. Verfahren nach Anspruch 9, wobei die Zusammensetzung ferner einen Fotoinitiator umfaßt und das Aushärten durch aktinisches Licht erfolgt.